# EUROPEAN PATENT APPLICATION

(11) **EP 4 654 171 A1**
(43) Date of publication of application: **26.11.2025**
(21) Application number: 23917681.1
(22) Date of filing: 08.12.2023
(51) Int. Cl.: G08G 1/09, G08G 1/16

(54) **INFORMATION PROCESSING DEVICE, INFORMATION PROCESSING METHOD, AND INFORMATION PROCESSING PROGRAM**

(30) Priority: 16.01.2023 JP 2023004310
(71) Applicant: Sony Semiconductor Solutions Corporation, Atsugi-shi, Kanagawa 243-0014 (JP)
(72) Inventor: OBA, Eiji, Atsugi-shi, Kanagawa 243-0014 (JP)
(74) Representative: Müller Hoffmann & Partner
(86) International application number: PCT/JP2023/043958
(87) International publication number: WO 2024/154470

(57) **Abstract**

An information processing device includes a recognition unit that recognizes a road sign included in a captured image captured by a camera mounted on a vehicle traveling on a travel road, a storage unit that stores a result of the recognition recognized by the recognition unit, and a notification unit that notifies a driver of the vehicle of sign information about the road sign based on the result of the recognition, as information about a travel road section, after the vehicle passes an installation point of the road sign.

## Description

### Field

The present disclosure relates to an information processing device, an information processing method, and an information processing program.

### Background

Various conventional technologies are known to call the attention of vehicle drivers. For example, there is known an in-vehicle electronic device that distinguishes the type of a road sign captured by an in-vehicle camera and determines whether to suppress notification based on the type of the road sign in consideration of importance based on the distinguished type of the road sign.

### Citation List

### Patent Literature

Patent Literature 1: JP 2012-68962 A

### Summary

### Technical Problem

However, in the above conventional technology, it is only determined whether to suppress the notification on the basis of the type of the road sign in consideration of the importance on the basis of the type of the road sign, and therefore, the vehicle drivers are not always allowed to have a situation recognition necessary for determination of driving behavior.

Therefore, the present disclosure proposes an information processing device, an information processing method, and an information processing program that enable to cause a vehicle driver to have a situation recognition (so-called situation awareness (SA)) including information having found at a passing point prior to a transition point, necessary for determination of the driving behavior.

### Solution to Problem

To solve the above problem, an information processing device includes a recognition unit that recognizes a road sign included in a captured image captured by a camera mounted on a vehicle traveling on a travel road, a storage unit that stores a result of the recognition recognized by the recognition unit, and a notification unit that notifies a driver of the vehicle of sign information about the road sign based on the result of the recognition, as information about a travel road section, after the vehicle passes an installation point of the road sign.

### Brief Description of Drawings

FIG. 1 is a diagram illustrating an exemplary configuration of an information processing device according to a first embodiment.
FIG. 2 is a flowchart illustrating an information processing procedure performed by the information processing device according to the first embodiment.
FIG. 3 is a diagram illustrating an exemplary processing of cutting out a sign area from a captured image according to the first embodiment.
FIG. 4 is a diagram illustrating an example of a notification screen according to the first embodiment.
FIG. 5 is a diagram illustrating an overview of information processing according to a modification of the first embodiment.
FIG. 6 is a diagram illustrating an overview of information processing according to a second embodiment.
FIG. 7 is a diagram illustrating an exemplary configuration of an in-vehicle device according to the second embodiment.
FIG. 8 is a hardware configuration diagram illustrating an example of a computer implementing the functions of the information processing device.

### Description of Embodiments

Embodiments of the present disclosure will be described in detail below with reference to the drawings. Note that in the following embodiments, the same portions are denoted by the same reference numerals, and descriptions thereof will not be repeated.

### (Embodiments)

### [1. First Embodiment]

### [1-1. Introduction]

Widespread of autonomous driving is further promising in the future. However, many development issues still remain before the autonomous driving function is available in all environments. Therefore, it is considered that transition from autonomous driving by an autonomous driving system to driving by a driver (hereinafter, driving by a driver may be referred to as "manual driving") is inevitable before the autonomous driving function is always available in all environments.

For example, in conventional manual driving, the driver is responsible for driving and is expected to look at road signs installed on a road all the time. In contrast, in the autonomous driving, the responsibility to driving is partially transitions to the autonomous driving system. Therefore, as compared with the manual driving, it is considered that the driver who uses driving assistance by the autonomous driving is likely not to pay attention to what is ahead, such as temporarily taking his/her eyes off a road ahead of the vehicle. As a result, in the autonomous driving, it is considered that a situation easily occurs in which the driver overlooks a road sign, a construction sign, or the like installed for the purpose of calling the driver's attention. Therefore, it is expected that a situation of transition from the autonomous driving by the autonomous driving system to the manual driving by the driver will occur without a recognition of the driver on caution information about the road ahead in a travel direction.

In addition, even in fully manual driving without using autonomous driving assistance, there is a possibility that the driver may pass the installation point of the road sign without looking at the sign at a moment when the vehicle passes the installation point of the road sign, due to thinking about something, blurred vision, or the like. In this way, even in the fully manual driving, a situation may occur in which the driver overlooks the road sign or the like, or in which the driver cannot grasp the details of the contents of the sign while passing through the installation point of the road sign or the like.

In contrast, an information processing device 100 according to the first embodiment recognizes a road sign included in a captured image captured by a camera mounted on a vehicle traveling on a travel road, stores a result of the recognition, and notifies a vehicle driver of sign information about the road sign based on the result of the recognition, as information about a travel road section and an itinerary section, after the vehicle passes an installation point of the road sign. With this configuration, the information processing device 100 enables to make the vehicle driver conscious of, for example, paying attention to the road sign that will be grasped without being overlooked if the driver drives while continuously paying attention to a driving environment (e.g., road ahead). In other words, the information processing device 100 enables to cause the vehicle driver to have the situation awareness (SA) that will be grasped by the driver without being overlooked if the driver drives while continuously paying attention to the driving environment (e.g., road ahead). Furthermore, the information processing device 100 enables direct follow-up presentation to the driver to reduce overlooking of various caution information. Therefore, the information processing device 100 enables the vehicle driver to have the situation recognition necessary for determination of the driving behavior.

### [1-2. Configuration of information processing device]

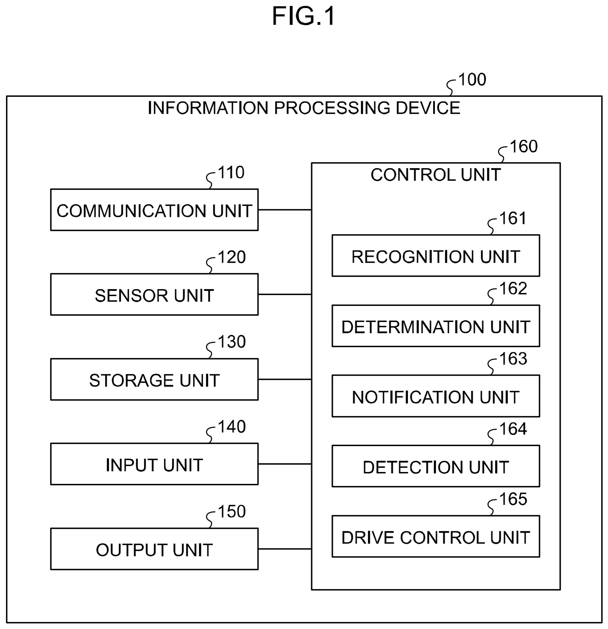

FIG. 1 is a diagram illustrating an exemplary configuration of the information processing device 100 according to the first embodiment. The information processing device 100 is an information processing device that is mounted on the vehicle traveling. For example, the information processing device 100 may be an in-vehicle device installed in the vehicle. Furthermore, the information processing device 100 may be a terminal device (e.g., smartphone, wearable device, or the like) used by the driver. As illustrated in FIG. 1, the information processing device 100 includes a communication unit 110, a sensor unit 120, a storage unit 130, an input unit 140, an output unit 150, and a control unit 160.

The communication unit 110 is implemented by, for example, a network interface card (NIC) or the like. Then, the communication unit 110 may be connected to a network (not illustrated) in a wired or wireless manner, and transmit and receive information to and from, for example, an external system or another information processing device 100.

The sensor unit 120 includes various sensors mounted on or connected to the information processing device 100. Note that the connection may be a wired connection or a wireless connection. For example, the sensors may be a detection device other than the information processing device 100, such as a wearable device, a wireless device, or the like.

Specifically, the sensor unit 120 includes a sensor that detects information outside the vehicle. For example, the sensor unit 120 includes a first camera that captures an image outside the vehicle. For example, the first camera captures an image ahead of the vehicle. Furthermore, the first camera transmits the captured image to the information processing device 100.

In addition, the sensor unit 120 includes a sensor that detects information inside the vehicle. For example, the sensor unit 120 includes a sensor that detects a state of the driver. For example, the sensor unit 120 includes a second camera that captures an image of the driver. For example, the second camera captures an image of the driver. In addition, the second camera transmits the captured image to the information processing device 100. Furthermore, the sensor unit 120 includes an optical sensor, a motion sensor, or a line-of-sight sensor that detects the line of sight of the driver. For example, the line-of-sight sensor detects a line-of-sight direction of the driver by using an eye tracking technology, on the basis of a result of the detection by the second camera, the optical sensor, the motion sensor, or the like. The line-of-sight sensor determines a gaze area at which the driver is gazing on the basis of the detected line-of-sight direction. The line-of-sight sensor transmits line-of-sight information including the determined gaze area, to the information processing device 100. Furthermore, the sensor unit 120 may include a motion sensor that detects a gesture or the like of the driver. When detecting the gesture or the like of the driver, the motion sensor may transmit motion information about the gesture or the like of the driver, to the information processing device 100.

The storage unit 130 is implemented by, for example, a semiconductor memory device such as a random access memory (RAM) or flash memory, or a storage device such as a hard disk or optical disk. For example, the storage unit 130 stores a result of recognition by a recognition unit 161.

The input unit 140 receives inputs for various operations from the driver. The input unit 140 is implemented by, for example, a touch screen. For example, with the functions of the touch screen, the input unit 140 receives various operations from the driver via the output unit 150.

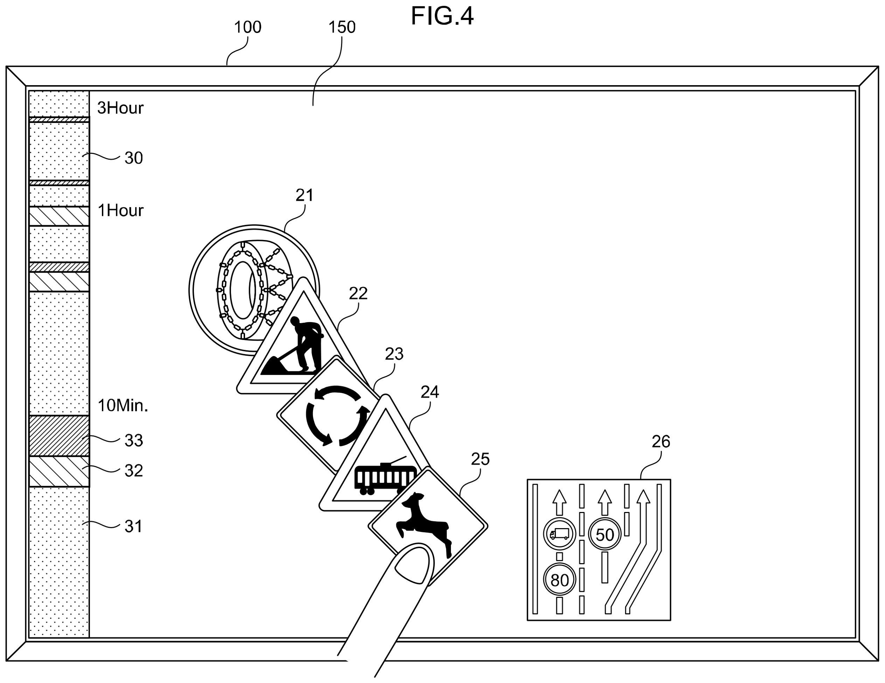

The output unit 150 displays various information under the control of the control unit 160. The output unit 150 is, for example, a display screen implemented by a liquid crystal display, an organic electro-luminescence (EL) display, or the like, and is a display device for displaying various information. For example, the output unit 150 displays a notification screen (see FIG. 4) which is described later. Note that, hereinafter, the output unit 150 may be referred to as screen.

The control unit 160 is a controller, and is implemented by executing various programs (corresponding to an example of an information processing program) stored in a storage device in the information processing device 100 by using, for example, a central processing unit (CPU), a micro processing unit (MPU), an application specific integrated circuit (ASIC), a field programmable gate array (FPGA), or the like, with a storage area such as RAM as a work area. In the example illustrated in FIG. 1, the control unit 160 includes the recognition unit 161, a determination unit 162, a notification unit 163, a detection unit 164, and a drive control unit 165.

The recognition unit 161 recognizes various information. For example, the recognition unit 161 recognizes the road sign included in a captured image captured by a camera mounted on a vehicle traveling on a travel road.

The determination unit 162 determines various information. For example, the determination unit 162 determines whether urgent notification of the sign information is required, on the basis of a content of the road sign.

The notification unit 163 notifies of various information. Specifically, after the vehicle passes the installation point of the road sign, the notification unit 163 notifies the vehicle driver of the sign information about the road sign based on a result of the recognition as information about the travel road section. For example, the notification unit 163 notifies of the sign information immediately before, during, or immediately after switching of the driving mode of the vehicle from the autonomous driving to the manual driving. For example, the notification unit 163 may start the notification of the sign information after the vehicle passes the installation point of the road sign and immediately before, during, or immediately after the driving mode of the vehicle is switched from the autonomous driving to the manual driving. Alternatively, the notification unit 163 may start the notification of the sign information immediately after the vehicle passes the installation point of the road sign. In addition, the notification unit 163 may start notification of the sign information at the timing of start of traveling of the vehicle in a corresponding section where the road sign corresponding to the sign information is installed. In addition, the notification unit 163 may finish the notification of the sign information at the timing of passage of the vehicle through the corresponding section where the road sign corresponding to the sign information is installed.

The detection unit 164 detects various information. For example, the detection unit 164 detects an action corresponding to the sign information by the driver. Here, the action corresponding to the sign information may be, for example, an action that the driver looks at a sign image. For example, the detection unit 164 detects the action that the driver looks at the sign image, as the action corresponding to the sign information, on the basis of the line-of-sight information of the driver acquired from the line-of-sight sensor of the sensor unit 120. In addition, the action corresponding to the sign information may be, for example, a behavior that the driver performs a driving operation corresponding to the sign information. For example, on the basis of an image of the driver acquired from the second camera of the sensor unit 120, the detection unit 164 detects the behavior that the driver performs a driving operation corresponding to the sign information, as the action corresponding to the sign information by the driver. Furthermore, the detection unit 164 detects, as the action corresponding to the sign information by the driver, the behavior that the driver performs a driving operation corresponding to the sign information, on the basis of the information indicating the behavior of the driver acquired from the motion sensor of the sensor unit 120. Note that the action detected by the detection unit 164 is not limited to the line of sight or the motion of the driver, and may be another action.

The drive control unit 165 performs driving control of the vehicle on the basis of various information.

### [1-3. Information processing procedure]

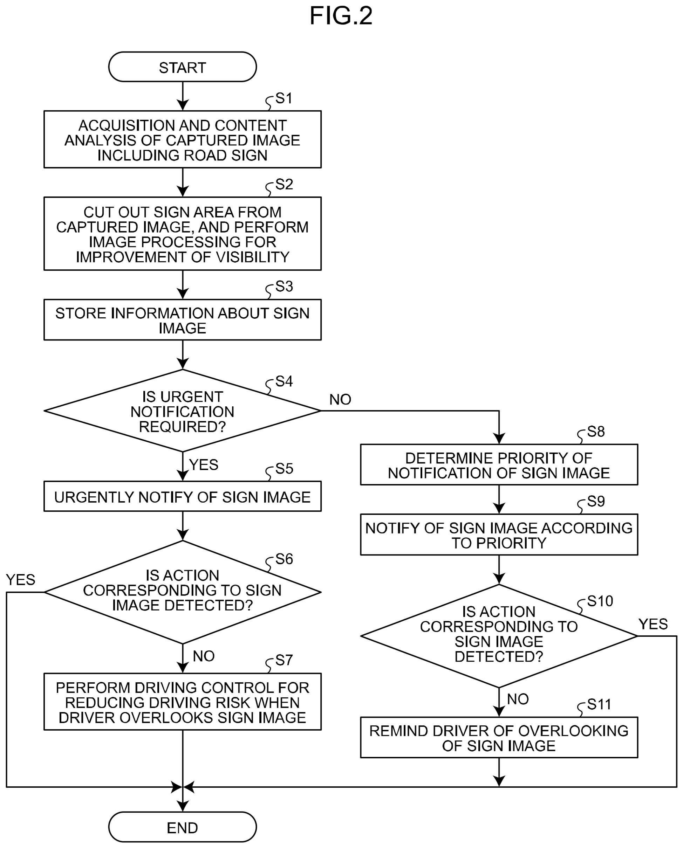

FIG. 2 is a flowchart illustrating an information processing procedure performed by the information processing device according to the first embodiment. In FIG. 2, the recognition unit 161 acquires a captured image including a road sign from the first camera of the sensor unit 120. Subsequently, the recognition unit 161 analyzes a content of the road sign included in the captured image (Step S1). For example, when the captured image including the road sign is input as input information, the recognition unit 161 acquires a first machine learning model trained to output information indicating the content of the road sign included in the captured image, as output information. Then, the recognition unit 161 uses the first machine learning model to obtain, as a result of the analysis, the information indicating the content of the road sign included in the captured image, from the captured image including the road sign.

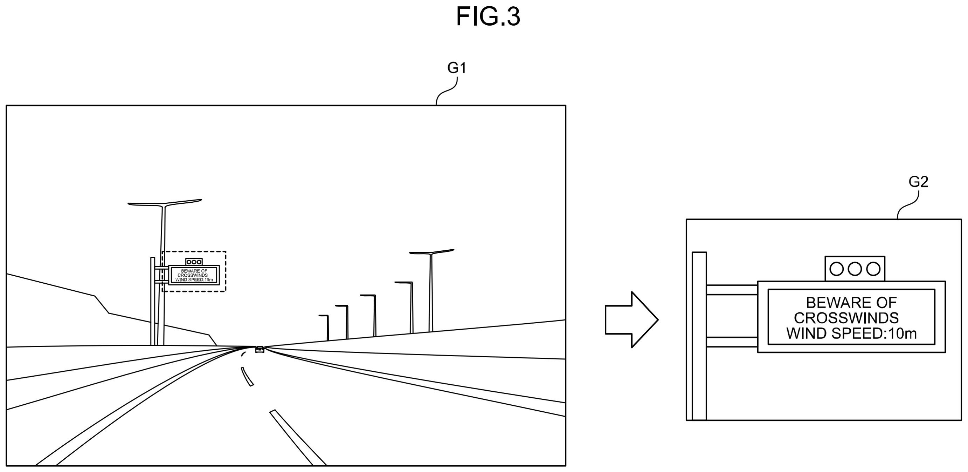

Furthermore, when analyzing the contents of the road sign included in the captured image, the recognition unit 161 cuts out a sign area from the captured image, and performs image processing for improvement of visibility (Step S2). Here, the sign area refers to an area of the captured image where the sign area is captured. FIG. 3 is a diagram illustrating an exemplary processing of cutting out a sign area from a captured image according to the first embodiment. In FIG. 3, the recognition unit 161 cuts out a sign area G2 from a captured image G1. For example, when the captured image including the road sign is input as the input information, the recognition unit 161 acquires a second machine learning model trained to output the sign area as the output information. Subsequently, the recognition unit 161 may obtain the sign area G2 from the captured image G1 including the road sign, by using the second machine learning model. Subsequently, the recognition unit 161 performs the image processing for improvement of the visibility of the sign area G2. In this way, the recognition unit 161 generates, as the sign information, the sign image corresponding to the road sign, on the basis of the sign area of the captured image corresponding to the road sign. In addition, the recognition unit 161 performs the image processing for improvement of visibility of the image generated on the basis of the sign area to generate the sign image.

Subsequently, the recognition unit 161 stores information about the sign area G2 (hereinafter, sign image) obtained after the image processing for improvement of the visibility, in the storage unit 130 (Step S3). For example, the recognition unit 161 stores, in the storage unit 130, information in which the sign image, the information indicating the content of the road sign, and information indicating the installation point of the road sign are associated with each other.

In addition, the determination unit 162 determines whether the urgent notification of the sign information is required, on the basis of the content of the road sign (Step S4). Specifically, the storage unit 130 stores information in which the content of the road sign (e.g., content of "accident ahead") is associated with urgent information indicating whether the urgent notification is required (e.g., information indicating "urgent notification is necessary"). The determination unit 162 refers to the storage unit 130 to determine whether the urgent information associated with the content of the road sign is information indicating that urgent notification is required. For example, when it is determined that the urgent information associated with the content of the road sign is the information indicating that the urgent notification is required, the determination unit 162 determines that the urgent notification of the sign information is required (Step S4; Yes). Furthermore, when it is determined that the urgent information associated with the content of the road sign is information indicating that the urgent notification is not required, the determination unit 162 determines that the urgent notification of the sign information is not required (Step S4; No).

In addition, the determination unit 162 may determine whether the urgent notification of the sign information is required, on the basis of a distance or an arrival time period from the installation point of the road sign to the corresponding point indicated by the content of the road sign. For example, the determination unit 162 determines whether the distance (or the arrival time period) from the installation point of the road sign to the corresponding point indicated by the content of the road sign is equal to or less than a first distance (or first time period). When it is determined that the distance (or arrival time period) from the installation point of the road sign to the corresponding point indicated by the content of the road sign is equal to or less than the first distance (or first time period), the determination unit 162 may determine that the urgent notification of the sign information is required (Step S4; Yes). Meanwhile, when it is determined that the distance (or arrival time period) from the installation point of the road sign to the corresponding point indicated by the content of the road sign is not equal to or less than the first distance (or first time period), the determination unit 162 may determine that the urgent notification of the sign information is not required (Step S4; No).

In addition, when the determination unit 162 determines that the urgent notification of the sign information is required (Step S4; Yes), the notification unit 163 urgently notifies of the sign information (Step S5). For example, the notification unit 163 generates the notification screen including the sign image for which urgent notification is required. Subsequently, the notification unit 163 displays the generated notification screen on the output unit 150, for urgent notification of the sign information. In this way, the notification unit 163 notifies of the sign information according to the content of the road sign.

Furthermore, after the urgent notification of the sign information by the notification unit 163, the determination unit 162 determines whether the action corresponding to the sign information by the driver is detected by the detection unit 164 (Step S6). In addition, the detection unit 164 detects the action corresponding to the sign information by the driver to detect that the driver has not overlooked the road sign. In other words, the detection unit 164 detects no action corresponding to the sign information by the driver to detect that the driver has overlooked the road sign.

In addition, when the determination unit 162 determines that the action corresponding to the sign information by the driver is detected by the detection unit 164 after the urgent notification of the sign information by the notification unit 163 (Step S6; Yes), the process is finished.

Furthermore, when the determination unit 162 determines that no action corresponding to the sign information by the driver is detected by the detection unit 164 after the urgent notification of the sign information by the notification unit 163 (Step S6; No), the drive control unit 165 performs driving control for reducing a driving risk caused when the driver overlooks the sign information (Step S7). For example, the drive control unit 165 may perform the driving control according to the content of the sign, for example, driving control for avoiding collision of the vehicle with an obstacle ahead, driving control for reducing the speed of the vehicle, driving control for stopping the vehicle on the side of a road, or the like.

In addition, when it is determined that the urgent notification of the sign information is not required (Step S4; No), the determination unit 162 determines a priority level of notification of the sign information, on the basis of the content of the road sign (Step S8). Specifically, the storage unit 130 stores information in which the content of the road sign is associated with priority information indicating the priority level of notification of the sign information (e.g., information indicating high priority, information indicating medium priority, information indicating low priority, or the like). The determination unit 162 refers to the storage unit 130 to determine the priority level of notification of the sign information, on the basis of the priority information indicating the priority level of notification of the sign information associated with the content of the road sign.

In addition, the determination unit 162 may determine the priority level of notification of the sign information, on the basis of the distance or the arrival time period from the installation point of the road sign to the corresponding point indicated by the content of the road sign. For example, the determination unit 162 determines that the smaller the road sign shows distance (or arrival time period) from the installation point of the road sign to the corresponding point indicated by the content of the road sign, the higher the priority level of notification of the sign information is. In addition, the determination unit 162 determines that the smaller the road sign shows distance (or arrival time period) from the installation point of the road sign to the corresponding point indicated by the content of the road sign, the lower the priority level of notification of the sign information is.

Furthermore, the determination unit 162 may determine the priority level of notification of the sign information according to the traveling condition of the vehicle. For example, the determination unit 162 determines the priority level of notification of the sign information according to vehicle traveling hours of the day. For example, for the vehicle traveling hours in daytime, the determination unit 162 determines that the priority of notification of the road sign indicating a school zone is high. On the other hand, for the vehicle traveling hours at night, the determination unit 162 determines that the priority of notification of the road sign indicating the school route is low. In addition, the determination unit 162 determines the priority level of notification of the sign information according to a weather condition when the vehicle travels. For example, when the temperature during traveling of the vehicle is lower than a first temperature, the determination unit 162 determines that the priority of notification of the road sign indicating caution on icy roads is high. On the other hand, when the temperature during traveling of the vehicle exceeds a second temperature, the determination unit 162 determines that the priority of notification of the road sign indicating caution on icy roads is low.

In addition, the determination unit 162 may update a ranking of the priority levels of notification of the sign information with traveling of the vehicle. For example, the determination unit 162 updates a ranking of the priority level of notification of the sign information, on the basis of a sign image newly acquired, with traveling of the vehicle.

In addition, the notification unit 163 notifies of the sign information according to the priority level determined by the determination unit 162 (Step S9). For example, the notification unit 163 generates the notification screen that displays the sign image with a higher priority closer to the front of the screen. In other words, the notification unit 163 generates the notification screen that displays the sign image with a lower priority closer to the rear of the screen. For example, the notification unit 163 generates the notification screen as illustrated in FIG. 4, which will be described later. Subsequently, the notification unit 163 causes the output unit 150 to display the generated notification screen, and notifies of the sign information according to the priority determined by the determination unit 162.

FIG. 4 is a diagram illustrating an example of the notification screen according to the first embodiment. In FIG. 4, the notification unit 163 generates the notification screen that displays sign images 21 to 26 generated by the recognition unit 161 so that a sign image with a higher priority is displayed closer to the front of the screen. In FIG. 4, it is assumed that among the sign images 21 to 26 generated by the recognition unit 161, a sign image having a smaller number has a lower priority. For example, among the sign images 21 to 26 generated by the recognition unit 161, the sign image 26 indicating information about lane change has the highest priority, and therefore, the notification unit 163 generates the notification screen that displays the sign image 26 at the forefront of the screen. In addition, the sign image 25 indicating warning about animals has the second highest priority, and therefore, the notification unit 163 generates the notification screen that displays the sign image 25 behind the sign image 26. In addition, the sign image 24 indicating a railroad crossing ahead has the third highest priority, and therefore, the notification unit 163 generates the notification screen that displays the sign image 24 behind the sign image 25. In addition, the sign image 23 indicating clockwise circulation within a traffic rotary has the fourth highest priority, and therefore, the notification unit 163 generates the notification screen that displays the sign image 23 behind the sign image 24. In addition, the sign image 22 indicating construction ahead has the fifth highest priority, and therefore, the notification unit 163 generates the notification screen that displays the sign image 22 behind the sign image 23. In addition, the sign image 21 indicating chain regulation has the lowest priority, and therefore, the notification unit 163 generates the notification screen that displays the sign image 21 in the rear of the screen. As described above, the notification unit 163 generates the notification screen that displays the sign images 21 to 26 generated by the recognition unit 161 side by side from the front side to the back side in the order according to the priorities of the sign images 21 to 26. Subsequently, the notification unit 163 displays the generated notification screen on the output unit 150.

Furthermore, the notification unit 163 may hide each of the sign images when the vehicle has passed through a travel section corresponding to the road sign corresponding to the sign image. In addition, with the functions of the touch screen, the input unit 140 may receive an operation indicating visual recognition of the sign image, from the driver via the output unit 150. For example, the input unit 140 may receive an operation of sliding the sign image or an operation of tapping the sign image, from the driver via the output unit 150, as the operation indicating visual recognition of the sign image. When the input unit 140 receives, from the driver, the operation indicating visual recognition of the sign image, the notification unit 163 may hide the corresponding sign image. This configuration enables the information processing device 100 to cause the driver to confirm visual recognition of the sign image as if a social media message is read/discarded, and thus, it is possible to prevent overlooking of the sign image.

In addition, the notification unit 163 may generate a notification screen including an area 30 that displays a level of an autonomous driving mode and a distance and a time from the current location of the vehicle, visually associated. In FIG. 4, the notification unit 163 generates a notification screen indicating transition, within 10 minutes from the current location, from an area 31 indicating level 4 of autonomous driving to an area 32 indicating level 3 of autonomous driving, and further to an area 33 indicating level 0 of autonomous driving (i.e., manual driving). This configuration enables the information processing device 100 to visually notify the driver of the timing of switching the driving mode of the vehicle from the autonomous driving to the manual driving, the timing during the switching, or the timing after the switching.

Furthermore, after notification of the sign information according to the priority by the notification unit 163, the determination unit 162 determines whether the action corresponding to the sign information by the driver is detected by the detection unit 164 (Step S10).

In addition, when the determination unit 162 determines that the action corresponding to the sign information by the driver is detected by the detection unit 164 after the notification of the sign information according to the priority by the notification unit 163 (Step S10; Yes), the process is finished.

Furthermore, when the notification unit 163 determines that no action corresponding to the sign information by the driver is detected by the detection unit 164 after the notification of the sign information according to the priority by the notification unit 163 (Step S10; No), the notification unit 163 reminds the driver of overlooking of the sign image (Step S11). In other words, when the detection unit 164 detects that the driver has overlooked the road sign, the notification unit 163 notifies of the sign information again. For example, when the detection unit 164 detects that the driver has overlooked the road sign, the notification unit 163 displays the sign image corresponding to the road sign, for which overlooking is detected, on the screen again. For example, the notification unit 163 may display blinking of the sign image corresponding to the road sign for which overlooking is detected.

### [1-4. Modification]

In the first embodiment described above, the notification unit 163 has notified the vehicle driver who uses, for example, driving assistance by the autonomous driving system, of the sign information on the sign information about the road sign fixed at a specific position on the road or the like. In a modification, the notification unit 163 notifies of sign information about a movable road sign (hereinafter, also referred to as a mobile road sign) that is mounted on a mobile object such as a road patrol car, instead of the road sign fixed on the road. Note that descriptions of the contents similar to those of the first embodiment will not be repeated.

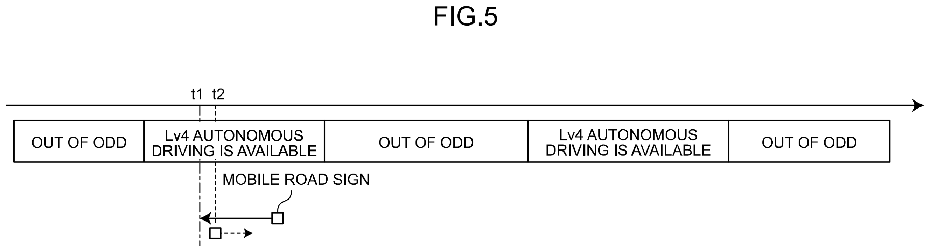

FIG. 5 is a diagram illustrating an overview of information processing according to the modification of the first embodiment. In FIG. 5, the horizontal axis represents time and a vehicle travel section. For example, it is assumed that the mobile road sign displaying "accident ahead" thereon approaches from a place of accident ahead of the vehicle when the vehicle is traveling in a section where level 4 autonomous driving is available. In addition, it is assumed that the vehicle and the mobile road sign pass each other at the timing of time t1 illustrated in FIG. 5. At this time, the recognition unit 161 recognizes the mobile road sign included in a captured image captured by a camera mounted on the vehicle. The storage unit 130 stores a result of the recognition by the recognition unit 161. The notification unit 163 notifies the vehicle driver of the sign information about the mobile road sign based on the result of the recognition, as information about the travel road section, after the vehicle passes by the mobile object on which the mobile road sign is mounted. In FIG. 5, the notification unit 163 notifies of the sign information about the mobile road sign at the timing of time t2 immediately after passing the mobile road sign. With this configuration, the information processing device 100 enables to cause the vehicle driver who uses level 4 (high driving automation) autonomous driving assistance to have situation recognition that will be grasped by the driver without being overlooked if the driver drives while continuously paying attention to the driving environment (e.g., road ahead), that is, the situation awareness (SA) that is equivalent to previous recognition of the mobile road sign by a driver who manually drives carefully along the entire section without being overlooked, from a certain point from which the driver takes over driving.

### [2. Second Embodiment]

In the first embodiment described above, for example, the information processing device 100 has notified the vehicle driver who uses the driving assistance by the autonomous driving system, of the sign information about the road sign. In the second embodiment, for example, an in-vehicle device 200 mounted on a first vehicle having had an accident or the like notifies a driver of a second vehicle near the first vehicle of accident information about occurrence of the accident or the like in the first vehicle.

### [2-1. Introduction]

In a conventional method, a vehicle driver who have had an accident or the like takes out a warning flare (formal name is "red fusee for motor vehicles") installed in the vehicle, moves to the rear side of the vehicle to perform a firing operation, and makes a driver of a vehicle behind urgently perceive the accident, a vehicle stopped on a road due to breakdown, or the like with red light emitted from the warning flare. However, as described also in the first embodiment, it is considered that the vehicle driver who uses driving assistance by the autonomous driving system is more likely not to pay attention to what is ahead, than in the manual driving, or does not look ahead at all depending on assistance provided. Therefore, it is considered that there is a high possibility that the vehicle driver who uses the driving assistance by the autonomous driving system does not notice the light emission of the warning flare. In addition, in a dark condition such as nighttime, it is considered that lighting the warning flare later delays the notice of the driver, even if the driver pays attention ahead. In addition, lights may not be turned on at all due to failure in an electrical system affected by stopping of the first vehicle due to the accident or breakdown, in some cases. In this case, the vehicle behind as the second vehicle suddenly comes to encounter the first vehicle stopped due to the accident or breakdown, in the dark. Therefore, for early detection by the second vehicle, prompt installation of the warning flare plays a big role. However, it takes time and effort to take out the warning flare for preparation and installation thereof, and further, it is very dangerous to walk and move to rear of the vehicle at night for installation of the warning flare, on an expressway. Furthermore, when the second vehicle behind is an autonomous driving vehicle in which the driver does not always visually confirm ahead of the vehicle, there is a high risk of considerable delay in recognition of approaching danger, and therefore, measures to prompt early notification and recognition in place of the warning flare are desired. Regardless of whether the second vehicle is in autonomous driving, a vehicle without lights located on a road leads to a delay in discovery from a vehicle behind. It is known that a stopped vehicle without lights at night is extremely dangerous because the vehicle leads to a chain reaction multi-car accident, for example, a driver of the vehicle behind brakes hard, causing a sudden lane change to avoid collision, or even if the vehicle can avoid the collision temporarily, another vehicle behind may be further obstructed.

In conventional manual driving, the driver is expected to constantly pay attention ahead of the vehicle, but it is difficult also for the driver who pays attention to discover the stopped vehicle without lights in the dark, and furthermore, in the vehicle using the autonomous driving system, the driver does not always pay attention ahead of the vehicle, approaches the corresponding first vehicle stopped during operation of the autonomous driving function without enabling early detection of the first vehicle, or cannot confirm the vehicle stopped due to accident, from a distance because close distances between vehicles interrupts view.

Safety needs to be secured for all road users in safe social introduction of autonomous driving, and in addition to simply preventing overlooking of the road sign, it is important to provide an attention notice to the second vehicle as soon as possible even at night or under a poor visibility, in order to achieve road safety. Here, a conventional mechanism has a plurality of problems such as whether the driver can actually take out the warning flare quickly after an accident of the first vehicle and install the warning flare behind the stopped vehicle, whether the driver can make an emergency call on the accident/breakdown information to a road manager or the like, and how quickly ta road management center can grasp the situation and occurrence point to issue a display instruction for presentation instruction to a road information display device. However, a series of these procedure steps is inevitably delayed. In addition, limiting to the road sign as in the first embodiment limits installation location of a road information display device, and therefore, prior information cannot be acquired at all from the first vehicle, with a risk of approaching the first vehicle. In other words, in order not to cause a delay due to taking out and moving and installation of the warning flare, or notification of a vehicle stopped due to accident, and a display instruction for the vehicle stopped due to accident to the road information display device, or the like, a system mounted on the first vehicle having an accident or broken-down is preferably configured to automatically detect the accident or breakdown, includes an independent power source automatically activated upon an accident/breakdown event even if an electrical system of the vehicle is broken, for compensation with an accident/stop emergency call system that transmits a wireless emergency call. With this configuration, even if a driver is injured in an accident or the like or failed to promptly install the warning flare, surrounding approaching vehicles are allowed to receive the wireless emergency call system and travels around the site with caution. These emergency call mechanisms may be linked with, for example, an automatic emergency call system called e-Call so that the driver who stops the vehicle due to breakdown or the like may manually issue an alarm. Alternatively, a trigger for transmission of the urgent information by the first vehicle may be transmission of the emergency call about a falling object at a passing point by the driver, and information is preferably obtained by adding a calling point and determination information.

Therefore, in the second embodiment, the driver of the second vehicle behind who uses the driving assistance by the autonomous driving system is notified of urgent notification information (also referred to as warning flare light) emitted using a radio wave from the first vehicle that has an accident or the like.

When the driver during driving moves by using the autonomous driving function, a route attention road sign having been overlooked while the driver is not steering in the normal transition is notified of, even after passing according to the first embodiment, but meanwhile in the second embodiment, when the first vehicle includes the wireless urgent notification system, if the vehicle behind approaches to a point around which the wireless emergency call is broadcasted, even an immediate preceding approach state that is not reflected in the road sign is received and detected, instead of or in parallel with installation of the warning flare, as prior danger information, and it is possible to prompt the driver to have preventive notification and emergency recognition. As a countermeasure, when the vehicle has breakdown or an accident, it is possible to minimize the influence of the accident or the breakdown by adopting a power supply separated from a main power supply of the vehicle. For example, it is effective to promptly notify the surroundings of a dangerous state through a radio wave by using an emergency call transmission device that is configured to be operable even by a secondary battery charged during normal operation from a vehicle main power supply, provided near the center of the vehicle, or provided in an impact buffer area where an EDR, an operation state recording device, or a data storage system for automated driving (DSSAD) device is installed. Note that it is effective to quickly notify the surroundings of danger not by handshake by one-to-one connection using a commercial mobile phone communication network such as e-Call, but by one-way broadcast transmission.

In the second embodiment, this configuration enables to cause the driver of the second vehicle who uses, for example, the driving assistance by the autonomous driving system to have situation recognition that will be grasped by the driver without being overlooked if the driver drives while continuously paying attention to the driving environment (e.g., road ahead), that is, situation awareness (SA).

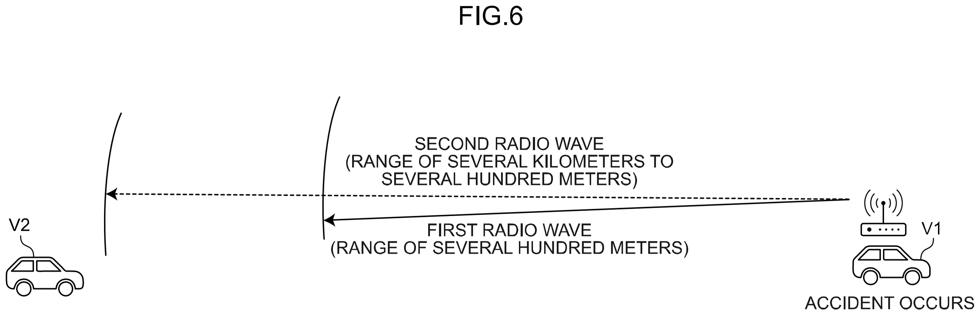

FIG. 6 is a diagram illustrating an overview of information processing according to the second embodiment. In FIG. 6, for example, a driver of a second vehicle V2 traveling behind a first vehicle V1 that has an accident or the like uses the driving assistance by the autonomous driving system, and pays little attention ahead, and therefore, an accident of collision between the second vehicle V2 and the first vehicle V1 may occur. In order to avoid such a situation, the in-vehicle device 200 (hereinafter, described as first in-vehicle device 200) mounted on the first vehicle V1 that is a vehicle having caused an accident or the like notifies an in-vehicle device 200 (hereinafter, described as second in-vehicle device 200) mounted on the second vehicle V2 located within a predetermined range from the first vehicle V1 of the urgent notification information through wireless communication. For example, the first in-vehicle device 200 may make a notification of the urgent notification information through a radio wave having directivity. For example, the first in-vehicle device 200 may make a notification of the urgent notification information through a radio wave having directivity in a direction in which the vehicle behind is estimated to be located. For example, the first in-vehicle device 200 may make a notification of the urgent notification information through a radio wave having directivity in a direction oriented upward behind the first vehicle V1.

In addition, the first in-vehicle device 200 notifies the second in-vehicle device 200 located within a predetermined range from the first vehicle V1 of the urgent notification information through each of a plurality of types of radio waves having different receivable distances. For example, the first in-vehicle device 200 notifies the second in-vehicle device 200 located within a predetermined range from the first vehicle V1 of the urgent notification information by wireless communication, through a first radio wave. The first radio wave is, for example, a radio wave receivable within a range of several hundred meters. As a result, the first in-vehicle device 200 can notify the driver of the second vehicle V2 of the urgent notification information even when a distance from the first vehicle V1 to the second vehicle V2 is very small, for example, within several hundred meters.

In addition, the first in-vehicle device 200 notifies the second in-vehicle device 200 located within a predetermined range from the first vehicle V1 of the urgent notification information by wireless communication, through a second radio wave (radio wave for the radio). The second radio wave is, for example, a radio wave receivable within a range of several kilometers to several hundred meters. This configuration enables the first in-vehicle device 200 to notify the driver of the second vehicle V2 of the urgent notification information, for example, even when the distance from the first vehicle V1 to the second vehicle V2 is slightly large, for example, several kilometers to several hundred meters.

In addition, the first in-vehicle device 200 may estimate the distance from the first vehicle V1 to the second vehicle V2 on the basis of the information about the radio wave used for notifying of the urgent notification information. For example, the first in-vehicle device 200 may estimate the distance from the first vehicle V1 to the second vehicle V2 on the basis of the type of the radio wave received by the second in-vehicle device 200, from among the first radio wave and the second radio wave. For example, when the radio wave received by the second in-vehicle device 200 is the first radio wave, the first in-vehicle device 200 estimates that the distance from the first vehicle V1 to the second vehicle V2 is within several hundred meters. When the radio wave received by the second in-vehicle device 200 is the second radio wave, the first in-vehicle device 200 estimates that the distance from the first vehicle V1 to the second vehicle V2 is within several kilometers to several hundred meters. Note that the first in-vehicle device 200 may estimate the distance from the first vehicle V1 to the second vehicle V2 by performing frequency modulation of radio waves.

From here, a procedure of information processing by the first in-vehicle device 200 will be described. The first in-vehicle device 200 detects the accident information such as an accident occurring around the first vehicle V1 or breakdown occurring in the first vehicle V1. For example, when detecting that the smoke candle installed in the first vehicle V1 is removed, the first in-vehicle device 200 determines detection of the accident information. In addition, when an incident due to abnormal acceleration caused by an accident or the like is detected by the event data recorder (EDR) mounted on the first vehicle V1, the first in-vehicle device 200 may determine detection of the accident information, as a recording instruction for recording/storing the information as a trigger, or by analyzing the information. Although it is not always necessary to use the information of the EDR for accident detection, mounting of the EDR will be essential in the future for accident recording, and therefore, substituted for another dedicated accident or breakdown detector. In addition, in addition to the accident or breakdown, when scattered objects on a road surface, danger falling objects, and the like are happened to be found when passing through a point during passage of a section, urgent notification may be performed manually, or the autonomous driving system may automatically determine an unidentified road debris for notification through confirmation by the driver to make an emergency call, the notifications serves as a safe and useful prior information for the vehicle behind.

Subsequently, when detecting the accident information, the first in-vehicle device 200 transmits the urgent notification information including position information of a global navigation satellite system (GNSS) mounted on the first vehicle V1. Specifically, the first in-vehicle device 200 transmits the urgent notification information through a plurality of types of radio waves having different radio wave coverage ranges. For example, the first in-vehicle device 200 transmits the urgent notification information through each of the first radio wave and the second radio wave.

Subsequently, the first in-vehicle device 200 transmits the urgent notification information for a service that manages road map information. Subsequently, the first in-vehicle device 200 turns on hazard lights (also referred to as hazard lamps) of the first vehicle V1.

Note that in the above description, the first in-vehicle device 200 circumferentially transmits the urgent notification information through radio waves to directly notifies the second in-vehicle device 200 of the urgent notification information, but the first in-vehicle device 200 may indirectly notify the second in-vehicle device 200 of the urgent notification information. For example, when detecting the accident information, the first in-vehicle device 200 transmits the urgent notification information including the position information of the GNSS mounted on the first vehicle V1, to a service that manages the road map information. When receiving the urgent notification information from the first in-vehicle device 200, the service that manages the road map information identifies the second vehicle V2 located within a predetermined range from the first vehicle V1, on the basis of the position information of the first vehicle V1. Subsequently, the service that manages the road map information notifies the second in-vehicle device 200 mounted on an identified second vehicle V2 of the urgent notification information. Public road infrastructures are used for traveling of vehicles manufactured in various times, and even if only one information transmission method is uniformly introduced, it takes more than 10 years to update vehicle devices that support reception, and therefore, it is desirable to perform information transmission supporting a combination of a plurality of methods from the first vehicle V1 without limiting the method.

### [2-2. Configuration of in-vehicle device]

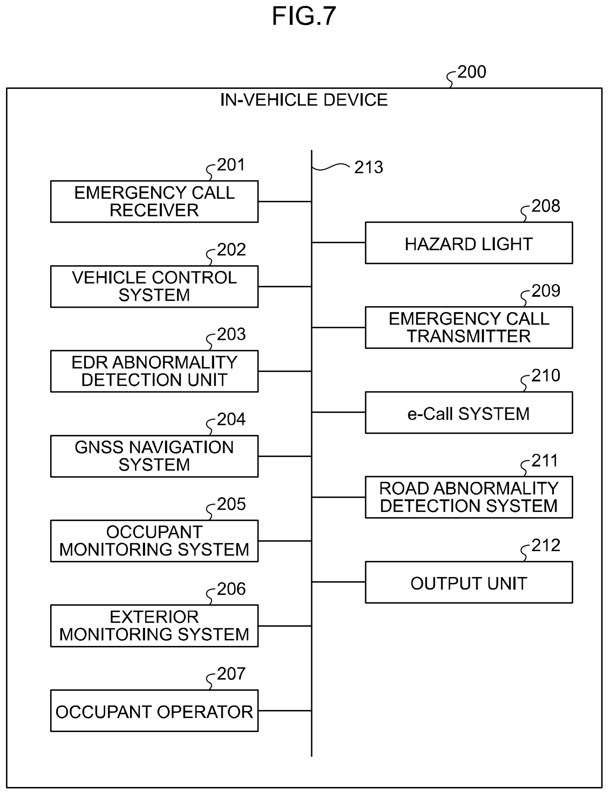

FIG. 7 is a diagram illustrating an exemplary configuration of the in-vehicle device 200 according to the second embodiment. In the example illustrated in FIG. 7, the in-vehicle device 200 includes an emergency call receiver 201, a vehicle control system 202, an EDR abnormality detection unit 203, a GNSS navigation system 204, an occupant monitoring system 205, an exterior monitoring system 206, an occupant operator 207, a hazard light 208, an emergency call transmitter 209, an e-Call system 210, a road abnormality detection system 211, an output unit 212, and a bus 213.

The emergency call receiver 201 receives a radio wave including the urgent notification information from the in-vehicle device 200 mounted on another vehicle. The vehicle control system 202 controls vehicle driving. For example, the vehicle control system 202 controls vehicle driving in the autonomous driving mode. The EDR abnormality detection unit 203 detects breakdown or the like of the vehicle itself by the event data recorder (EDR). The GNSS navigation system 204 acquires the position information of the GNSS. The occupant monitoring system 205 monitors a situation and a risk of an occupant (e.g., driver or the like) in the vehicle. For example, the occupant monitoring system 205 notifies the driver of a warning when detecting a decrease in attention, drowsiness, or a microsleep symptom. The exterior monitoring system 206 monitors a situation outside the vehicle. The occupant operator 207 is an operation button that receives various operations from an occupant (e.g., driver or the like) in the vehicle. The hazard light 208 is a hazard lamp. The emergency call transmitter 209 transmits a radio wave including the urgent notification information. The e-Call system 210 is a system that automatically reports to a nearest police station or department via an emergency call center in an emergency such as a vehicle accident. The road abnormality detection system 211 detects an abnormality of a road. The output unit 212 outputs various information. For example, the output unit 212 is a screen that displays various information. The bus 213 connects the emergency call receiver 201, the vehicle control system 202, the EDR abnormality detection unit 203, the GNSS navigation system 204, the occupant monitoring system 205, the exterior monitoring system 206, the occupant operator 207, the hazard light 208, the emergency call transmitter 209, the e-Call system 210, the road abnormality detection system 211, and the output unit 212.

The vehicle also includes a local power source (battery) for the hazard light 208 and the emergency call transmitter 209.

### [3. Effects]

As described above, the information processing device 100 according to the first embodiment or the modification includes the recognition unit 161, the storage unit 130, and the notification unit 163. The recognition unit 161 recognizes the road sign included in a captured image captured by the camera mounted on a vehicle traveling on a travel road. The storage unit 130 stores a result of the recognition by the recognition unit 161. After the vehicle passes the installation point of the road sign, the notification unit 163 notifies the vehicle driver of the sign information about the road sign based on a result of the recognition as information about the travel road section, according to the priority and the effectiveness.

With this configuration, the information processing device 100 enables to make the vehicle driver conscious of, for example, paying attention to the road sign that will be grasped without being overlooked if the driver drives while continuously paying attention to a driving environment (e.g., road ahead). In other words, even in a situation where the vehicle driver has overlooked the road sign installed in the road section that the driver has passed through by using the autonomous driving function during work other than driving of the driver, when the information processing device 100 appropriately determines and selectively provides the driver with the road sign or guide that will be grasped without being overlooked if the driver drives while continuously paying attention to the driving environment (e.g., road ahead), thereby sequentially providing information according to the priority while preventing excessive provision of information, and thus, it is possible to allow the vehicle driver to grasp the entire situation necessary for safe traveling, that is, to have situation awareness (SA). Therefore, the information processing device 100 enables the vehicle driver to have the situation recognition necessary for determination of the driving behavior. In addition, the notification information is not limited to the information of the fixed stationary road sign, and includes a movable caution display which is moved and installed according to urgency and automatic wireless emergency warning information.

In addition, the notification unit 163 notifies of the sign information according to the content of the road sign.

As a result, the information processing device 100 enables to make the vehicle driver conscious of paying attention corresponding to the content of the road sign.

Furthermore, the information processing device 100 further includes the determination unit 162. The determination unit 162 determines whether urgent notification of the sign information is required, on the basis of the content of the road sign. When the determination unit 162 determines that the urgent notification of the sign information is required, the notification unit 163 urgently notifies of the sign information.

As a result, the information processing device 100 enables the urgent notification of urgent sign information, and therefore, it is possible to cause the vehicle driver to have the situation recognition necessary for determination of the driving behavior even when the driver concentrates on work other than driving during autonomous driving.

Furthermore, the information processing device 100 further includes the detection unit 164. The detection unit 164 detects the action corresponding to the sign information by the driver. After the urgent notification of the sign information by the notification unit 163, the determination unit 162 determines whether the action corresponding to the sign information by the driver is detected by the detection unit 164.

This configuration enables the information processing device 100 to selectively and timely present important information with a higher priority to prevent excessive information due to collective presentation of all the road signs captured during passage, for easy understanding of the contents of information by the driver, and it is possible to prevent the driver from overlooking highly urgent sign information.

Furthermore, the information processing device 100 further includes the drive control unit 165. The drive control unit 165 performs driving control of the vehicle. When the determination unit 162 determines that no action corresponding to the sign information by the driver is detected by the detection unit 164 after the urgent notification of the sign information by the notification unit 163, the drive control unit 165 performs driving control for reducing the driving risk caused when the driver overlooks the sign information.

This configuration enables the information processing device 100 to reduce the driving risk even when the driver overlooks highly urgent sign information.

In addition, the determination unit 162 determines the priority of notification of the sign information, on the basis of the content of the road sign. The notification unit 163 notifies of the sign information according to the priority determined by the determination unit 162.

This configuration enables the information processing device 100 to notify of the sign information according to the priority, and therefore, it is possible to cause the vehicle driver to have the situation recognition necessary for determination of the driving behavior.

Furthermore, the detection unit 164 detects the action corresponding to the sign information by the driver. After notification of the sign information by the notification unit 163 according to the priority, the determination unit 162 determines whether the action corresponding to the sign information by the driver is detected by the detection unit 164.

This configuration enables the information processing device 100 to prevent the driver from overlooking the sign information.

In addition, the recognition unit 161 recognizes the road sign installed on the travel road on which the vehicle travels in autonomous driving. The notification unit 163 notifies of the sign information immediately before, during, or immediately after switching of the driving mode of the vehicle from the autonomous driving to the manual driving.

This configuration enables the information processing device 100 to cause the vehicle driver to have the situation recognition necessary for determination of the driving behavior immediately before, during, or immediately after the switching of the driving mode of the vehicle from the autonomous driving to the manual driving.

In addition, the notification unit 163 notifies of the sign information while the vehicle is traveling in the travel road section, on the basis of the information about the travel road section corresponding to the road sign.

This configuration enables the information processing device 100 to notify of the sign information according to the travel road section corresponding to the road sign.

In addition, the detection unit 164 detects that the driver has overlooked the road sign. When the detection unit 164 detects that the driver has overlooked the road sign, the notification unit 163 notifies of the sign information.

This configuration enables the information processing device 100 to cause the driver to reliably recognize the sign information.

Furthermore, the recognition unit 161 generates, as the sign information, the sign image corresponding to the road sign, on the basis of the sign area of the captured image corresponding to the road sign.

This configuration enables the information processing device 100 to present the sign image that is readily visually recognized, to the driver.

In addition, the recognition unit 161 performs the image processing for improvement of visibility of the image generated on the basis of the sign area to generate the sign image.

This configuration enables the information processing device 100 to present the sign image that is readily visually recognized, to the driver.

### [4. Hardware configuration]

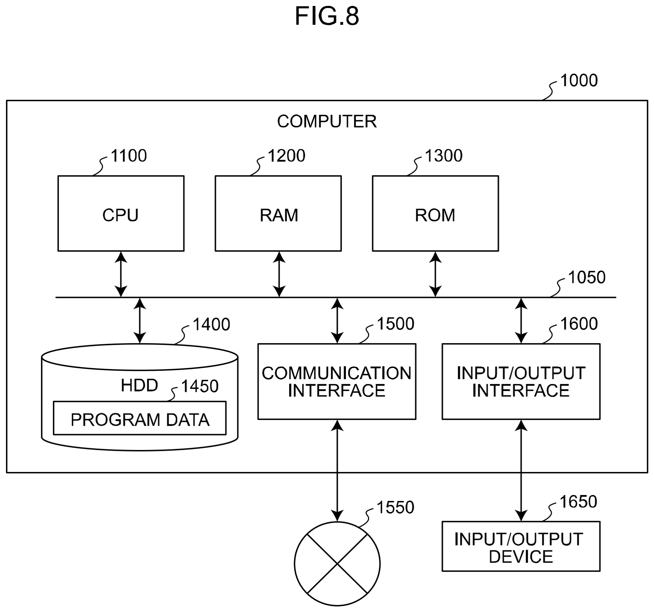

Information devices such as the information processing device 100 and the in-vehicle device 200 according to the embodiments having been described above are implemented by, for example, a computer 1000 having a configuration as illustrated in FIG. 8. FIG. 8 is a hardware configuration diagram illustrating an example of the computer 1000 implementing the functions of the information processing devices, such as the information processing device 100 and the in-vehicle device 200. An example of the information processing device 100 according to the first embodiment will be described below. The computer 1000 includes a CPU 1100, a RAM 1200, a read only memory (ROM) 1300, a hard disk drive (HDD) 1400, a communication interface 1500, and an input/output interface 1600. The respective units of the computer 1000 are connected by a bus 1050.

The CPU 1100 is operated on the basis of programs stored in the ROM 1300 or the HDD 1400 to control the respective units. For example, the CPU 1100 deploys a program stored in the ROM 1300 or the HDD 1400 to the RAM 1200, and performs processing corresponding to each of various programs.

The ROM 1300 stores a boot program, such as a basic input output system (BIOS), executed by the CPU 1100 when the computer 1000 is booted, a program depending on the hardware of the computer 1000, and the like.

The HDD 1400 is a computer-readable recording medium that non-transitorily records a program executed by the CPU 1100, data used by the program, and the like. Specifically, the HDD 1400 is a recording medium that records a program according to the present disclosure as an example of program data 1450.

The communication interface 1500 is an interface for connecting the computer 1000 with an external network 1550 (e.g., the Internet). For example, the CPU 1100 receives data from another device or transmits data generated by the CPU 1100 to another device, via the communication interface 1500.

The input/output interface 1600 is an interface for connecting an input/output device 1650 and the computer 1000. For example, the CPU 1100 receives data from an input device such as a keyboard or mouse via the input/output interface 1600. In addition, the CPU 1100 transmits data to an output device such as a display, speaker, or printer via the input/output interface 1600. Furthermore, the input/output interface 1600 may function as a media interface that reads a program or the like recorded on a predetermined recording medium. The medium includes, for example, an optical recording medium such as a digital versatile disc (DVD) or phase change rewritable disk (PD), a magneto-optical recording medium such as a magneto-optical disk (MO), a tape medium, a magnetic recording medium, a semiconductor memory, or the like.

For example, when the computer 1000 functions as the information processing device 100 according to the embodiment, the CPU 1100 of the computer 1000 executes the programs loaded on the RAM 1200 to implement the functions of the control unit 160 and the like. Furthermore, the HDD 1400 stores the programs according to the present disclosure and various data. Note that the CPU 1100 executes the program data 1450 read from the HDD 1400, but in another example, the CPU 1100 may acquire these programs from another device via the external network 1550.

Furthermore, the effects descried herein are merely illustrative or exemplified effects, and are not limitative. In other words, with or in place of the above effects, the technology according to the present disclosure can provide other effects that are apparent to those skilled in the art from the description herein.

Note that the present technology can also have the following configurations.
(1) An information processing device comprising:
   a recognition unit that recognizes a road sign included in a captured image captured by a camera mounted on a vehicle traveling on a travel road;
   a storage unit that stores a result of the recognition recognized by the recognition unit; and
   a notification unit that notifies a driver of the vehicle of sign information about the road sign based on the result of the recognition, as information about a travel road section, after the vehicle passes an installation point of the road sign.
(2) The information processing device according to(1), wherein
   the notification unit
   notifies of the sign information according to a content of the road sign.
(3) The information processing device according to (2), further comprising
   a determination unit that determines whether urgent notification of the sign information is required, on a basis of content of the road sign,
   wherein the notification unit
   urgently notifies of the sign information, when the determination unit determines that the urgent notification of the sign information is required.
(4) The information processing device according to(3), further comprising
   a detection unit that detects an action corresponding to the sign information by the driver,
   wherein the determination unit
   determines whether the action corresponding to the sign information by the driver has been detected by the detection unit, after the urgent notification of the sign information by the notification unit.
(5) The information processing device according to(4), further comprising
   a drive control unit that performs driving control of the vehicle,
   wherein the drive control unit
   performs driving control for reducing a driving risk caused when the driver overlooks the sign information, when the determination unit determines that no action corresponding to the sign information by the driver is detected by the detection unit, after the urgent notification of the sign information by the notification unit.
(6) The information processing device according to any one of (2) to (5), further comprising
   a determination unit that determines a priority of notification of the sign information, on a basis of the content of the road sign,
   wherein the notification unit
   notifies the sign information according to the priority determined by the determination unit.
(7) The information processing device according to(6), further comprising
   a detection unit that detects an action corresponding to the sign information by the driver,
   wherein the determination unit
   determines whether the action corresponding to the sign information by the driver has been detected by the detection unit, after notification of the sign information by the notification unit according to the priority.
(8) The information processing device according to any one of (1) to (7), wherein
   the recognition unit
   recognizes the road sign installed on the travel road on which the vehicle during autonomous driving travels; and
   the notification unit
   notifies of the sign information immediately before, during, or immediately after switching of a driving mode of the vehicle from autonomous driving to manual driving.
(9) The information processing device according to any one of (1) to (8), wherein
   the notification unit
   notifies of the sign information while the vehicle is traveling in the travel road section, on a basis of the information about the travel road section corresponding to the road sign.
(10) The information processing device according to any one of (1) to (9), further comprising
   a detection unit that detects overlooking of the road sign by the driver,
   wherein the notification unit
   notifies of the sign information, when the detection unit detects overlooking of the road sign by the driver.
(11) The information processing device according to any one of (1) to (10), wherein
   the recognition unit
   generates, as the sign information, a sign image corresponding to the road sign, on a basis of a sign area of the captured image corresponding to the road sign.
(12) The information processing device according to (11), wherein
   the recognition unit
   performs image processing for improvement of visibility of the image generated on a basis of the sign area to generate the sign image.
(13) An information processing method, the method executed by an information processing device, the method comprising:
   recognizing a road sign included in a captured image captured by a camera mounted on a vehicle traveling on a travel road;
   storing a result of the recognition recognized in a storage unit; and
   notifying a driver of the vehicle of sign information about the road sign based on the result of the recognition, as information about a travel road section, after the vehicle passes an installation point of the road sign.
(14) A program for causing
   a computer to function as
   an information processing device comprising:
      a recognition unit that recognizes a road sign included in a captured image captured by a camera mounted on a vehicle traveling on a travel road;
      a storage unit that stores a result of the recognition recognized by the recognition unit; and
      a notification unit that notifies a driver of the vehicle of sign information about the road sign based on the result of the recognition, as information about a travel road section, after the vehicle passes an installation point of the road sign.

### Reference Signs List

- 100: INFORMATION PROCESSING DEVICE
- 110: COMMUNICATION UNIT
- 120: SENSOR UNIT
- 130: STORAGE UNIT
- 140: INPUT UNIT
- 150: OUTPUT UNIT
- 160: CONTROL UNIT
- 161: RECOGNITION UNIT
- 162: DETERMINATION UNIT
- 163: NOTIFICATION UNIT
- 164: DETECTION UNIT
- 165: DRIVE CONTROL UNIT

## Claims

1. An information processing device comprising:
a recognition unit that recognizes a road sign included in a captured image captured by a camera mounted on a vehicle traveling on a travel road;
a storage unit that stores a result of the recognition recognized by the recognition unit; and
a notification unit that notifies a driver of the vehicle of sign information about the road sign based on the result of the recognition, as information about a travel road section, after the vehicle passes an installation point of the road sign.

2. The information processing device according to claim 1, wherein
the notification unit
notifies of the sign information according to a content of the road sign.

3. The information processing device according to claim 2, further comprising
a determination unit that determines whether urgent notification of the sign information is required, on a basis of content of the road sign,
wherein the notification unit
urgently notifies of the sign information, when the determination unit determines that the urgent notification of the sign information is required.

4. The information processing device according to claim 3, further comprising
a detection unit that detects an action corresponding to the sign information by the driver,
wherein the determination unit
determines whether the action corresponding to the sign information by the driver has been detected by the detection unit, after the urgent notification of the sign information by the notification unit.

5. The information processing device according to claim 4, further comprising
a drive control unit that performs driving control of the vehicle,
wherein the drive control unit
performs driving control for reducing a driving risk caused when the driver overlooks the sign information, when the determination unit determines that no action corresponding to the sign information by the driver is detected by the detection unit, after the urgent notification of the sign information by the notification unit.

6. The information processing device according to claim 2, further comprising
a determination unit that determines a priority of notification of the sign information, on a basis of the content of the road sign,
wherein the notification unit
notifies the sign information according to the priority determined by the determination unit.

7. The information processing device according to claim 6, further comprising
a detection unit that detects an action corresponding to the sign information by the driver,
wherein the determination unit
determines whether the action corresponding to the sign information by the driver has been detected by the detection unit, after notification of the sign information by the notification unit according to the priority.

8. The information processing device according to claim 1, wherein
the recognition unit
recognizes the road sign installed on the travel road on which the vehicle during autonomous driving travels; and
the notification unit
notifies of the sign information immediately before, during, or immediately after switching of a driving mode of the vehicle from autonomous driving to manual driving.

9. The information processing device according to claim 1, wherein
the notification unit
notifies of the sign information while the vehicle is traveling in the travel road section, on a basis of the information about the travel road section corresponding to the road sign.

10. The information processing device according to claim 1, further comprising
a detection unit that detects overlooking of the road sign by the driver,
wherein the notification unit
notifies of the sign information, when the detection unit detects overlooking of the road sign by the driver.

11. The information processing device according to claim 1, wherein
the recognition unit
generates, as the sign information, a sign image corresponding to the road sign, on a basis of a sign area of the captured image corresponding to the road sign.

12. The information processing device according to claim 11, wherein
the recognition unit
performs image processing for improvement of visibility of the image generated on a basis of the sign area to generate the sign image.

13. An information processing method, the method executed by an information processing device, the method comprising:
recognizing a road sign included in a captured image captured by a camera mounted on a vehicle traveling on a travel road;
storing a result of the recognition recognized in a storage unit; and
notifying a driver of the vehicle of sign information about the road sign based on the result of the recognition, as information about a travel road section, after the vehicle passes an installation point of the road sign.

14. A program for causing
a computer to function as
an information processing device comprising:
a recognition unit that recognizes a road sign included in a captured image captured by a camera mounted on a vehicle traveling on a travel road;
a storage unit that stores a result of the recognition recognized by the recognition unit; and
a notification unit that notifies a driver of the vehicle of sign information about the road sign based on the result of the recognition, as information about a travel road section, after the vehicle passes an installation point of the road sign.
